# EUROPEAN PATENT SPECIFICATION

(11) **EP 3 838 625 B1**
(45) Date of publication and mention of the grant of the patent: **01.02.2023**
(21) Application number: 20211160.5
(22) Date of filing: 02.12.2020
(51) Int. Cl.: B60C 11/00, B60C 11/03, B60C 11/12

(54) **PNEUMATIC TIRE**
LUFTREIFEN
PNEUMATIQUE

(30) Priority: 19.12.2019 JP 2019229002
(43) Date of publication of application: 23.06.2021
(73) Proprietor: Sumitomo Rubber Industries, Ltd., Kobe-shi, Hyogo-ken 651-0072 (JP)
(72) Inventor: MAEKAWA, Tetsuya, Kobe-shi, Hyogo 651-0072 (JP); YOSHIMURA, Kozo, Kobe-shi, Hyogo 651-0072 (JP); FUNASE, Natsumi, Kobe-shi, Hyogo 651-0072 (JP)
(74) Representative: Manitz Finsterwald Patent- und Rechtsanwaltspartnerschaft mbB

(56) References cited:
- EP-A1- 2 578 417
- EP-A1- 3 153 334
- FR-A1- 3 026 055

## Description

### BACKGROUND OF THE INVENTION

### Field of the Invention

The present invention relates to a pneumatic tire.

### Description of the Background Art

A tire comes into contact with a road surface at the tread thereof. In consideration of running on a wet road surface, grooves are normally formed on the tread. Various studies have been conducted for the tread in order to improve the performance of the tire (for example, Japanese Laid-Open Patent Publication No. H3-25003).

FR 3 026 055 A1 discloses a pneumatic tire comprising the features according to the preamble of claim 1.

EP 2 578 417 A1 discloses a pneumatic tire including a plurality of circumferential grooves which are formed on a tread, whereby a plurality of land portions is formed in the tread, wherein a plurality of lateral grooves each having a groove width of 2.0 mm or greater are formed on a shoulder land portion.

Vehicles have been becoming quieter, and thus tires have also been required to improve quietness. In recent years, electric vehicles in each of which a motor is used as a power generator instead of an engine have become widespread, so that tires have been required to further improve quietness.

The present invention has been made in view of the above circumstances and provides a pneumatic tire having excellent quietness.

### SUMMARY OF THE INVENTION

A pneumatic tire according to an aspect of the present invention includes a tread having a base layer and a cap layer located radially outward of the base layer. The cap layer includes a center element and a pair of side elements located outward of the center element in an axial direction, and the hardness of each side element is lower than the hardness of the center element. A plurality of circumferential grooves are formed on the tread, whereby a plurality of land portions are formed in the tread. Among the plurality of circumferential grooves, a circumferential groove located on each outer side in the axial direction is a shoulder circumferential groove. Among the plurality of land portions, a land portion located on each outer side in the axial direction is a shoulder land portion, and a land portion located inward of the shoulder land portion is a middle land portion. A plurality of lateral grooves each having a groove width of 2.0 mm or greater are formed on the shoulder land portion. In a ground-contact surface obtained by fitting the tire onto a normal rim, adjusting an internal pressure of the tire to a normal internal pressure, and pressing the tire against a road surface at a load equal to 68% of a normal load at a camber angle of 0°, a ratio of areas of the lateral grooves included in the ground-contact surface of the shoulder land portion to an area of the ground-contact surface of the shoulder land portion is not greater than 3%. The cap layer in the shoulder land portion includes the side element.

In the pneumatic tire, the lateral grooves each have an end portion within the shoulder land portion and extend from the end portion toward an end of the tread. A plurality of open sipes each having a groove width of 1.5 mm or less are formed on the shoulder land portion, and the open sipes connect the shoulder circumferential groove and the end portions of the lateral grooves.

Preferably, in the pneumatic tire, the cap layer in the shoulder land portion is composed of the side element.

Preferably, in the pneumatic tire, a thickness ratio of the base layer in the shoulder land portion is higher than a thickness ratio of the base layer in the middle land portion.

Preferably, in the pneumatic tire, the plurality of circumferential grooves include a middle circumferential groove located inward of the shoulder circumferential groove in the axial direction, and a portion between the shoulder circumferential groove and the middle circumferential groove is the middle land portion. A plurality of dead-end sipes each having a groove width of 1.5 mm or less are formed on the middle land portion. The dead-end sipes include a first dead-end sipe having an end portion within the middle land portion and connecting the end portion and the shoulder circumferential groove, and a second dead-end sipe having an end portion within the middle land portion and connecting the end portion and the middle circumferential groove. The first dead-end sipe and the second dead-end sipe are inclined relative to the axial direction, and a direction of inclination of the first dead-end sipe and a direction of inclination of the second dead-end sipe are opposite to each other.

Preferably, in the pneumatic tire, the first dead-end sipe has a groove width larger than that of the second dead-end sipe.

According to the present invention, a pneumatic tire having excellent quietness is obtained.

### BRIEF DESCRIPTION OF THE DRAWINGS

FIG. 1 is a cross-sectional view showing a part of a pneumatic tire according to an embodiment of the present invention;
FIG. 2 is a development showing a part of a tread surface of the tire in FIG. 1;
FIG. 3 shows an image of a ground-contact surface of the tire in FIG. 1; and
FIG. 4 is a cross-sectional view showing a part of the tire in FIG. 1.

### DESCRIPTION OF THE PREFERRED EMBODIMENTS

Hereinafter, the present invention will be described in detail based on preferred embodiments with appropriate reference to the drawings.

In the present invention, a state where a tire is mounted on a normal rim, the internal pressure of the tire is adjusted to a normal internal pressure, and no load is applied to the tire is referred to as a normal state. In the present invention, unless otherwise specified, the dimensions and angles of components of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. In the case where the tire is for a passenger car, unless otherwise specified, the normal internal pressure is 250 kPa.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads. In the case where the tire is for a passenger car, unless otherwise specified, the normal load is a load equal to 88% of the above load.

In the present invention, of the elements forming the tire, the hardness of each element formed from a crosslinked rubber is measured according to the standards of JIS K6253 under a temperature condition of 23°C using a type A durometer.

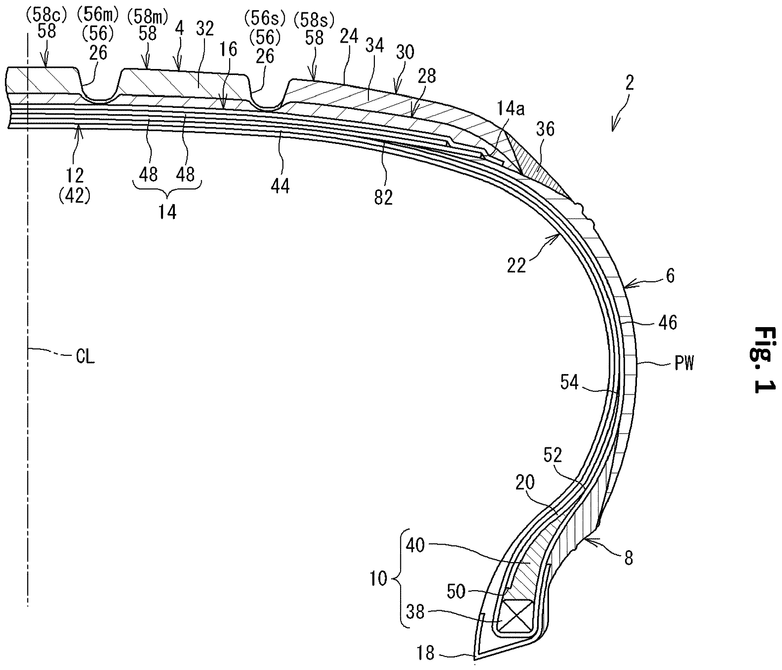

FIG. 1 shows a part of a pneumatic tire 2 (hereinafter, sometimes referred to simply as "tire 2") according to an embodiment of the present invention. The tire 2 is mounted to a passenger car.

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

In FIG. 1, reference character PW represents an axially outer end of the tire 2. In the case where decorations such as patterns and letters are present on a side surface, the outer end PW is specified on the basis of a virtual side surface obtained on the assumption that the decorations are not present. The distance in the axial direction from one outer end PW to the other outer end PW is the maximum width of the tire 2, that is, the cross-sectional width of the tire 2. The outer end PW is a position (hereinafter, maximum width position) at which the tire 2 has the maximum width.

The tire 2 includes a tread 4, a pair of sidewalls 6, a pair of clinches 8, a pair of beads 10, a carcass 12, a belt 14, a band 16, a pair of chafers 18, a pair of strip apexes 20, and an inner liner 22.

The tread 4 is formed from a crosslinked rubber. The tread 4 comes into contact with a road surface at an outer surface 24 thereof, that is, at a tread surface 24. Grooves 26 are formed on the tread surface 24.

The tread 4 has a base layer 28 and a cap layer 30. The base layer 28 is located radially outward of the belt 14 and the band 16. The base layer 28 covers the entirety of the band 16. The hardness of the base layer 28 is not less than 50 and not greater than 60.

The cap layer 30 is located radially outward of the base layer 28. The cap layer 30 covers the entirety of the base layer 28. The outer surface of the cap layer 30 is the tread surface 24.

In the tire 2, the cap layer 30 has a center element 32 and a pair of side elements 34. The center element 32 forms a center portion of the cap layer 30 in the axial direction. Each side element 34 is located outward of the center element 32 in the axial direction. The side element 34 forms an outer portion of the cap layer 30 in the axial direction. In the tire 2, the cap layer 30 is composed of the center element 32 and the pair of side elements 34.

In the tire 2, the hardness of each side element 34 is lower than the hardness of the center element 32. In other words, the side element 34 is more flexible than the center element 32. The above-described base layer 28 is more flexible than the center element 32. In the tire 2, the hardness of the base layer 28 is equal to the hardness of the side element 34, or the base layer 28 is more flexible than the side element 34.

Each sidewall 6 is connected to an end of the tread 4. The sidewall 6 is located radially inward of the tread 4. The sidewall 6 extends from the end of the tread 4 toward the clinch 8. The sidewall 6 is formed from a crosslinked rubber.

In the tire 2, the tread 4 and the sidewall 6 are connected to each other via a wing 36. The wing 36 is formed from a crosslinked rubber for which adhesion is taken into consideration.

Each clinch 8 is located radially inward of the sidewall 6. Although not shown, the clinch 8 comes into a flange of a rim. The clinch 8 is formed from a crosslinked rubber for which wear resistance is taken into consideration.

Each bead 10 is located axially inward of the clinch 8. The bead 10 includes a core 38 and an apex 40. The core 38 has a ring shape. The core 38 includes a wire made of steel. As shown in FIG. 1, the core 38 has a rectangular cross-sectional shape. The apex 40 is located radially outward of the core 38. The apex 40 is formed from a crosslinked rubber that has high stiffness. As shown in FIG. 1, the apex 40 is tapered outward in the radial direction.

The carcass 12 is located inward of the tread 4, the pair of sidewalls 6, and the pair of clinches 8. The carcass 12 extends on and between one bead 10 and the other bead 10. The carcass 12 has a radial structure. The carcass 12 includes at least one carcass ply 42.

The carcass 12 of the tire 2 is composed of one carcass ply 42. The carcass ply 42 is turned up around each core 38. The carcass ply 42 has: a ply main body 44 that extends on and between one core 38 and the other core 38; and a pair of turned-up portions 46 that are connected to the ply main body 44 and turned up around the respective cores 38 from the inner side toward the outer side in the axial direction.

The carcass ply 42 includes a large number of carcass cords aligned with each other, which are not shown. These carcass cords are covered with a topping rubber. Each carcass cord intersects the equator plane CL. In the tire 2, a cord formed from an organic fiber is used as each carcass cord. Examples of the organic fiber include nylon fibers, rayon fibers, polyester fibers, and aramid fibers.

The belt 14 is laminated on the carcass 12 on the radially inner side of the tread 4. The belt 14 includes at least two belt plies 48 laminated in the radial direction.

The belt 14 of the tire 2 is composed of two belt plies 48. Each of the two belt plies 48 includes a large number of belt cords aligned with each other, which are not shown. These belt cords are covered with a topping rubber. Each belt cord is inclined relative to the equator plane CL. The material of each belt cord is steel.

The band 16 is located inward of the tread 4 in the radial direction. The band 16 is located between the tread 4 and the belt 14 in the radial direction. The band 16 of the tire 2 is a full band that covers the entirety of the belt 14. The band 16 may further include a pair of edge bands that cover end portions of the full band. The band 16 may be composed of a pair of edge bands instead of a full band. In this case, the edge bands cover end portions of the belt 14.

The band 16 includes a band cord, which is not shown. In the band 16, the band cord is spirally wound in the circumferential direction. The band cord is covered with a topping rubber. A cord formed from an organic fiber is used as the band cord. Examples of the organic fiber include nylon fibers, rayon fibers, polyester fibers, and aramid fibers.

Each chafer 18 is located radially inward of the bead 10. Although not shown, the chafer 18 comes into contact with a seat of the rim. In the tire 2, the chafer 18 includes a fabric and a rubber with which the fabric is impregnated.

Each strip apex 20 is located inward of the clinch 8 in the axial direction. The strip apex 20 is located outward of the bead 10 in the radial direction. The strip apex 20 extends in the radial direction along the carcass 12.

As shown in FIG. 1, in the tire 2, an inner portion of the strip apex 20 is located between the apex 40 and the ply main body 44. An outer portion of the strip apex 20 is located between the ply main body 44 and the turned-up portion 46. In the radial direction, an inner end 50 of the strip apex 20 is located between the core 38 and an outer end 52 of the apex 40, and an outer end 54 of the strip apex 20 is located between the outer end 52 of the apex 40 and the maximum width position PW.

The strip apex 20 is formed from a crosslinked rubber that has high stiffness. In the tire 2, the crosslinked rubber for the strip apex 20 is the same as the crosslinked rubber for the apex 40.

The inner liner 22 is located inward of the carcass 12. The inner liner 22 forms an inner surface of the tire 2. The inner liner 22 is formed from a crosslinked rubber that has an excellent air blocking property. The inner liner 22 maintains the internal pressure of the tire 2.

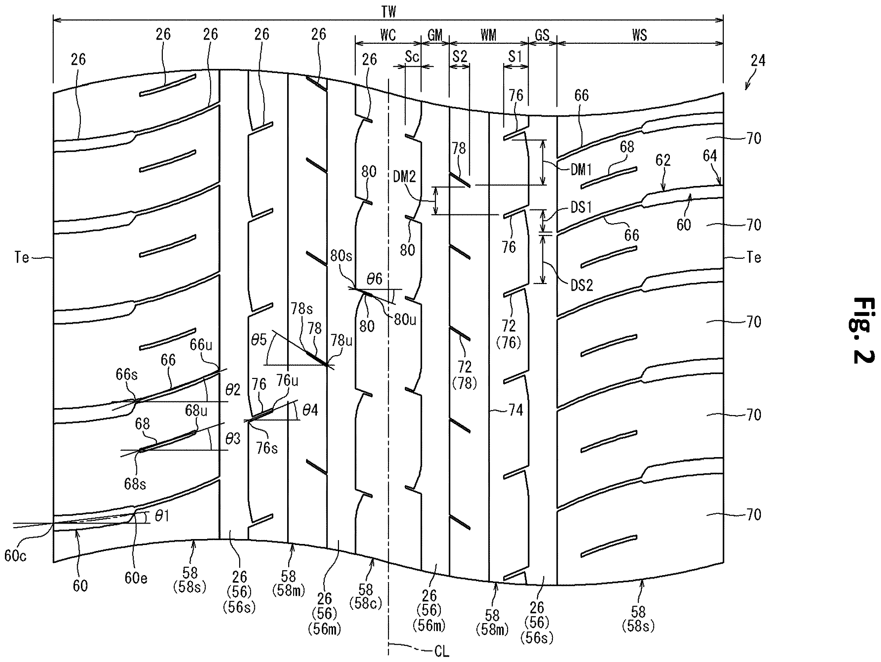

FIG. 2 shows a development of the tread surface 24. FIG. 2 shows a part of the tread surface 24. In FIG. 2, the right-left direction is the axial direction of the tire 2, and the up-down direction is the circumferential direction of the tire 2. The direction perpendicular to the surface of the sheet of FIG. 2 is the radial direction of the tire 2.

In FIG. 2, reference character Te represents an axially outer end of a ground-contact surface obtained by pressing the tire 2 in the normal state against a flat road surface at a camber angle of 0° in the normal load (hereinafter, an end of the ground-contact surface). A double-headed arrow TW represents a ground-contact width of the tread 4. The ground-contact width TW is represented as the distance in the axial direction from one end Te of the ground-contact surface to the other end Te of the ground-contact surface.

As described above, the grooves 26 are formed on the tread 4 of the tire 2. Accordingly, a tread pattern is formed. Of the grooves 26 forming the tread pattern, the grooves 26 each having a groove width of 1.5 mm or less are referred to as sipes.

On the tread 4 of the tire 2, a plurality of circumferential grooves 56 each having a groove width of at least 2.0 mm or greater and extending in the circumferential direction are formed as the grooves 26 forming the tread pattern. Accordingly, a plurality of land portions 58 are formed in the tread 4. On the tread 4, at least three circumferential grooves 56 are formed. As shown in FIG. 2, four circumferential grooves 56 are formed on the tread 4 of the tire 2, and five land portions 58 are formed therein.

In the tire 2, among the plurality of circumferential grooves 56, a circumferential groove 56s located on the outer side in the axial direction is a shoulder circumferential groove. A circumferential groove 56m located inward of the shoulder circumferential groove 56s is a middle circumferential groove. Four circumferential grooves 56 are formed on the tread 4 of the tire 2, and include a pair of middle circumferential grooves 56m located with the equator plane CL therebetween, and a pair of shoulder circumferential grooves 56s located outward of the middle circumferential grooves 56m, respectively. In the case where a circumferential groove 56 is further provided inward of the middle circumferential grooves 56m in the axial direction, this circumferential groove 56 is referred to as a center circumferential groove.

In FIG. 2, a double-headed arrow GM represents the groove width of the middle circumferential groove 56m. A double-headed arrow GS represents the groove width of the shoulder circumferential groove 56s. Each of the groove widths of the grooves 26 such as the circumferential grooves 56 is represented as the shortest distance from one edge of the groove 24 to the other edge of the groove 26. In the case where each edge is rounded, the groove width is measured with the point of intersection of an extension of a groove wall and an extension of the tread surface 24 being regarded as an edge.

The groove width and the groove depth of each circumferential groove 56 are set as appropriate in consideration of the specifications of the tire 2, etc. From the viewpoint of balancing drainage performance and steering stability well, the groove width GM of each middle circumferential groove 56m and the groove width GS of each shoulder circumferential groove 56s are each preferably not less than 5% and not greater than 6% of the tread ground-contact width TW. From the same viewpoint, the groove depth of each middle circumferential groove 56m and the groove depth of each shoulder circumferential groove 56s are each preferably not less than 6 mm and not greater than 10 mm.

In the tire 2, among the plurality of land portions 58, a land portion 58s located on the outer side in the axial direction is a shoulder land portion. A land portion 58m located inward of the shoulder land portion 58s is a middle land portion. A land portion 58c located inward of the middle land portion 58m is a center land portion. In the tire 2, a portion between two middle circumferential grooves 56m is a center land portion 58c, and the center land portion 58c is located on the equator. A portion between each middle circumferential groove 56m and each shoulder circumferential groove 56s is a middle land portion 58m, and a portion that is outward of each shoulder circumferential groove 56s is a shoulder land portion 58s.

In FIG. 2, a double-headed arrow WC represents the width of the center land portion 58c. A double-headed arrow WM represents the width of the middle land portion 58m. A double-headed arrow WS represents the width of the shoulder land portion 58s. Each of the width WC of the center land portion 58c and the width WM of the middle land portion 58m is represented as the distance in the axial direction from one edge of the land portion 58 to the other edge of the land portion 58. The width WS of the shoulder land portion 58s is represented as the distance in the axial direction from the edge of the center land portion 58c to the end Te of the ground-contact surface.

In the tire 2, the width of each land portion 58 is set as appropriate in consideration of the specifications of the tire 2, etc. From the viewpoint of balancing drainage performance and steering stability well, the width WC of the center land portion 58c is preferably not less than 0.05 times and not greater than 0.20 times the ground-contact width TW of the tread 4. From the same viewpoint, the width WM of each middle land portion 58m is preferably not less than 1.0 times and not greater than 1.5 times the width WC of the center land portion 58c. From the same viewpoint, the width WS of each shoulder land portion 58s is preferably not less than 1.5 times and not greater than 3.0 times the width WC of the center land portion 58c.

On each shoulder land portion 58s, a plurality of lateral grooves 60 are formed as the grooves 26 forming the tread pattern. These lateral grooves 60 extend substantially in the axial direction and are located at intervals in the circumferential direction. Each of the lateral grooves 60 has a groove width of at least 2.0 mm or greater. In the tire 2, the ratio of the width of each lateral groove 60 to the width GS of the shoulder circumferential groove 56s is preferably not less than 45% and preferably not greater than 65%. The ratio of the depth of each lateral groove 60 to the depth of the shoulder circumferential groove 56s is preferably not less than 60% and preferably not greater than 80%.

Each lateral groove 60 has an end portion within the shoulder land portion 58s. The lateral groove 60 extends from the end portion toward the end of the tread 4. The lateral groove 60 includes a curved portion 62 that includes the end portion and is inclined relative to the axial direction, and a straight portion 64 that is connected to the curved portion 62 and extends in the axial direction. In the tire 2, the curved portion 62 is shaped such that the angle of the curved portion 62 relative to the axial direction gradually increases toward the equator side. The edges of the lateral groove 60 contribute to ensuring the traction performance of the tire 2.

The lateral groove 60 is inclined relative to the axial direction as a whole. In FIG. 2, reference character θ1 represents the inclination angle of the lateral groove 60. The inclination angle 1 is represented as an angle, relative to the axial direction, of a straight line that connects: a point of intersection 60c of a straight line representing the end Te of the ground-contact surface and a groove width center line of the lateral groove 60; and an axially inner end 60e of the groove width center line of the lateral groove 60.

In the tire 2, from the viewpoint of balancing noise performance and steering stability well while ensuring traction performance, the inclination angle θ1 of the lateral groove 60 is preferably not less than 5° and preferably not greater than 15°.

A plurality of open sipes 66 and a plurality of closed sipes 68 are formed on each shoulder land portion 58s. As shown in FIG. 2, in the tire 2, the open sipes 66 and the closed sipes 68 are alternately located in the circumferential direction.

Each open sipe 66 is a sipe having a groove width of 1.5 mm or less. The open sipe 66 extends from the end portion of the lateral groove 60 toward the shoulder circumferential groove 56s. The open sipe 66 connects the shoulder circumferential groove 56s and the end portion of the lateral groove 60. Similar to the lateral groove 60, specifically, similar to the curved portion 62 of the lateral groove 60, the open sipe 66 is inclined relative to the axial direction. The direction of inclination of the open sipe 66 is the same as that of the curved portion 62. The open sipe 66 and the lateral groove 60 are smoothly connected to each other.

In the tire 2, the open sipe 66 is shaped such that the angle of the open sipe 66 relative to the axial direction gradually increases toward the equator side. The open sipe 66 contributes to steering stability.

In FIG. 2, reference character θ2 represents the inclination angle of the open sipe 66. The inclination angle θ2 is represented as an angle, relative to the axial direction, of a straight line connecting an axially outer end 66s of the open sipe 66 and an axially inner end 66u of the open sipe 66. Although not shown, the outer end 66s and the inner end 66u of the open sipe 66 are located on a groove width center line of the open sipe 66.

In the tire 2, from the viewpoint of balancing noise performance and steering stability well while ensuring traction performance, the inclination angle θ2 of the open sipe 66 is preferably not less than 15° and preferably not greater than 30°.

In the tire 2, each lateral groove 60 and each open sipe 66 are contiguous to each other. The lateral groove 60 and the open sipe 66 form a composite groove that effectively guides water within the composite groove, toward the end of the tread 4 when the tire 2 is running on a wet road surface.

In the tire 2, the composite groove formed by the lateral groove 60 and the open sipe 66 traverses the shoulder land portion 58s. In the tire 2, a plurality of composite grooves are formed on each shoulder land portion 58s, whereby a plurality of shoulder blocks 70 are formed in the shoulder land portion 58s. The shoulder land portion 58s includes the plurality of shoulder blocks 70, and these shoulder blocks 70 are aligned in the circumferential direction. These composite grooves impart appropriate flexibility to the shoulder land portion 58s.

Each closed sipe 68 is a sipe having a groove width of 1.5 mm or less. The entirety of the closed sipe 68 is located within the shoulder land portion 58s. The closed sipe 68 is not connected to any other groove 26. The closed sipe 68 is independent of any other groove 26. As shown in FIG. 2, similar to each open sipe 66, each closed sipe 68 is inclined relative to the axial direction. The direction of inclination of the closed sipe 68 is the same as that of the open sipe 66.

In the tire 2, the closed sipe 68 is shaped such that the angle of the closed sipe 68 relative to the axial direction gradually increases toward the equator side. The edges of the closed sipe 68 contribute to ensuring the traction performance of the tire 2.

In FIG. 2, reference character θ3 represents the inclination angle of the closed sipe 68. The inclination angle θ3 is represented as an angle, relative to the axial direction, of a straight line connecting an axially outer end 68s of the closed sipe 68 and an axially inner end 68u of the closed sipe 68. Although not shown, the outer end 68s and the inner end 68u of the closed sipe 68 are located on a groove width center line of the closed sipe 68.

In the tire 2, from the viewpoint of balancing noise performance and steering stability well while ensuring traction performance, the inclination angle θ3 of the closed sipe 68 is preferably not less than 15° and preferably not greater than 25°.

In the tire 2, the closed sipe 68 is located at an axially inner portion of the shoulder land portion 58s. The closed sipe 68, together with the open sipe 66, imparts appropriate flexibility to the axially inner portion of the shoulder land portion 58s. In the tire 2, a portion having a specific contact pressure is less likely to occur in a ground-contact surface that is in contact with a road surface, so that good wear resistance is achieved.

In the tire 2, a plurality of dead-end sipes 72 and a circumferential sipe 74 are formed on each middle land portion 58m. The dead-end sipes 72 and the circumferential sipe 74 of the middle land portion 58m are each a sipe having a groove width of 1.5 mm or less. On the middle land portion 58m, each dead-end sipe 72 and the circumferential sipe 74 do not intersect each other.

The circumferential sipe 74 is located at the center in the width direction of the middle land portion 58m. The circumferential sipe 74 extends in the circumferential direction. The depth of the circumferential sipe 74 is not greater than 3.0 mm.

The plurality of dead-end sipes 72 include a plurality of first dead-end sipes 76 formed on an outer portion of the middle land portion 58m, and a plurality of second dead-end sipes 78 formed on an inner portion of the middle land portion 58m. The above-described circumferential sipe 74 is located between the first dead-end sipes 76 and the second dead-end sipes 78 in the axial direction.

The plurality of first dead-end sipes 76 are located at intervals in the circumferential direction. Each first dead-end sipe 76 has an end portion within the middle land portion 58m. This end portion is located outward of the above-described circumferential sipe 74 in the axial direction. The first dead-end sipe 76 extends from this end portion toward the shoulder circumferential groove 56s. The first dead-end sipe 76 connects this end portion and the shoulder circumferential groove 56s. The first dead-end sipe 76 is inclined relative to the axial direction. The direction of inclination of the first dead-end sipe 76 is the same as that of each open sipe 66 formed on the shoulder land portion 58s. The edges of the first dead-end sipe 76 contribute to ensuring the traction performance of the tire 2.

In FIG. 2, reference character θ4 represents the inclination angle of the first dead-end sipe 76. The inclination angle θ4 is represented as an angle, relative to the axial direction, of a straight line connecting an axially outer end 76s of the first dead-end sipe 76 and an axially inner end 76u of the first dead-end sipe 76. Although not shown, the outer end 76s and the inner end 76u of the first dead-end sipe 76 are located on a groove width center line of the first dead-end sipe 76.

In the tire 2, from the viewpoint of balancing noise performance and steering stability well while ensuring traction performance, the inclination angle θ4 of the first dead-end sipe 76 is preferably not less than 15° and preferably not greater than 25°.

The plurality of second dead-end sipes 78 are located at intervals in the circumferential direction. Each second dead-end sipe 78 has an end portion within the middle land portion 58m. This end portion is located inward of the above-described circumferential sipe 74 in the axial direction. The second dead-end sipe 78 extends from this end portion toward the middle circumferential groove 56m. The second dead-end sipe 78 connects this end portion and the middle circumferential groove 56m. The second dead-end sipe 78 is inclined relative to the axial direction. In the tire 2, the direction of inclination of each first dead-end sipe 76 and the direction of inclination of each second dead-end sipe 78 are opposite to each other. The edges of the second dead-end sipe 78 contribute to ensuring the traction performance of the tire 2.

In FIG. 2, reference character θ5 represents the inclination angle of the second dead-end sipe 78. The inclination angle θ5 is represented as an angle, relative to the axial direction, of a straight line connecting an axially outer end 78s of the second dead-end sipe 78 and an axially inner end 78u of the second dead-end sipe 78. Although not shown, the outer end 78s and the inner end 78u of the second dead-end sipe 78 are located on a groove width center line of the second dead-end sipe 78.

In the tire 2, from the viewpoint of balancing noise performance and steering stability well while ensuring traction performance, the inclination angle θ5 of the second dead-end sipe 78 is preferably not less than 30° and preferably not greater than 40°.

In FIG. 2, a double-headed arrow S1 represents the length in the axial direction of the first dead-end sipe 76 of the middle land portion 58m. A double-headed arrow S2 represents the length in the axial direction of the second dead-end sipe 78 of the middle land portion 58m.

In the tire 2, the length S1 in the axial direction of the first dead-end sipe 76 and the length S2 in the axial direction of the second dead-end sipe 78 are set as appropriate in consideration of the specifications of the tire 2, etc. From the viewpoint of balancing noise performance and steering stability well while ensuring traction performance, the length S1 in the axial direction of the first dead-end sipe 76 is preferably not less than 30% and not greater than 49% of the width WM of the middle land portion 58m. From the same viewpoint, the length S2 in the axial direction of the second dead-end sipe 78 is preferably not less than 30% and not greater than 49% of the width WM of the middle land portion 58m.

In the tire 2, the groove width of each first dead-end sipe 76 is larger than the groove width of each second dead-end sipe 78. In the tire 2, noise performance and steering stability are well balanced while traction performance is ensured. From this viewpoint, the groove width of the first dead-end sipe 76 is preferably not less than 1.1 times and not greater than 1.5 times the groove width of the second dead-end sipe 78.

In the tire 2, a plurality of third dead-end sipes 80 are formed on the center land portion 58c. Each third dead-end sipe 80 of the center land portion 58c is a sipe having a groove width of 1.5 mm or less. The groove width of the third dead-end sipe 80 is equal to that of each second dead-end sipe 78 of each middle land portion 58m.

The plurality of third dead-end sipes 80 are located at intervals in the circumferential direction. Each third dead-end sipe 80 has an end portion within the center land portion 58c. This end portion is located outward of the equator in the axial direction. The third dead-end sipe 80 extends from this end portion toward the middle circumferential groove 56m. The third dead-end sipe 80 connects this end portion and the middle circumferential groove 56m. The third dead-end sipe 80 is inclined relative to the axial direction. The direction of inclination of the third dead-end sipe 80 is the same as that of each second dead-end sipe 78 formed on each middle land portion 58m.

In the tire 2, the third dead-end sipes 80 are formed at edge portions on both sides of the center land portion 58c. As shown in FIG. 2, the direction of inclination of each third dead-end sipe 80 provided at one edge portion is the same as that of each third dead-end sipe 80 provided at the other edge portion. In the tire 2, the edges of the third dead-end sipes 80 of the center land portion 58c contribute to ensuring the traction performance of the tire 2.

In FIG. 2, reference character θ6 represents the inclination angle of the third dead-end sipe 80. The inclination angle θ6 is represented as an angle, relative to the axial direction, of a straight line connecting an axially outer end 80s of the third dead-end sipe 80 and an axially inner end 80u of the third dead-end sipe 80. Although not shown, the outer end 80s and the inner end 80u of the third dead-end sipe 80 are located on a groove width center line of the third dead-end sipe 80.

In the tire 2, from the viewpoint of balancing noise performance and steering stability well while ensuring traction performance, the inclination angle θ6 of the third dead-end sipe 80 is preferably not less than 20° and preferably not greater than 30°.

In FIG. 2, a double-headed arrow Sc represents the length in the axial direction of the third dead-end sipe 80 of the center land portion 58c. In the tire 2, the length Sc in the axial direction of the third dead-end sipe 80 is set as appropriate in consideration of the specifications of the tire 2, etc. From the viewpoint of balancing noise performance and steering stability well while ensuring traction performance, the length Sc in the axial direction of the third dead-end sipe 80 is preferably not less than 15% and not greater than 30% of the width WC of the center land portion 58c.

As shown in FIG. 2, each open sipe 66 formed on each shoulder land portion 58s is located between two first dead-end sipes 76 formed on the middle land portion 58m, in the circumferential direction. In the tire 2, from the viewpoint of balancing noise performance and steering stability well while ensuring traction performance, the open sipe 66 is preferably located at an interval of 5 mm or greater from one first dead-end sipe 76 of the two first dead-end sipes 76 located near the open sipe 66. From the same viewpoint, the open sipe 66 is preferably located at an interval of 5 mm or greater from the other first dead-end sipe 76. The intervals between the open sipe 66 and the first dead-end sipes 76 are each represented as the distance in the circumferential direction from the opening of the open sipe 66 to the opening of the first dead-end sipe 76, which are provided in the groove wall of the shoulder circumferential groove 56s, as indicated by double-headed arrows DS1 and DS2 in FIG. 2.

As shown in FIG. 2, each second dead-end sipe 78 formed on the equator side of each middle land portion 58m, that is, on an inner portion of each middle land portion 58m is located between two first dead-end sipes 76 formed on the shoulder land portion 58s side of the middle land portion 58m, that is, on an outer portion of the middle land portion 58m, in the circumferential direction. In the tire 2, from the viewpoint of balancing noise performance and steering stability well while ensuring traction performance, the second dead-end sipe 78 is preferably located at an interval of 5 mm or greater from one first dead-end sipe 76 of the two first dead-end sipes 76 located near the second dead-end sipe 78. From the same viewpoint, the second dead-end sipe 78 is also preferably located at an interval of 5 mm or greater from the other first dead-end sipe 76. The intervals between the second dead-end sipe 78 and the first dead-end sipes 76 are each represented as the distance in the circumferential direction from an end portion of the second dead-end sipe 78 to an end portion of the first dead-end sipe 76 as indicated by double-headed arrows DM1 and DM2 in FIG. 2.

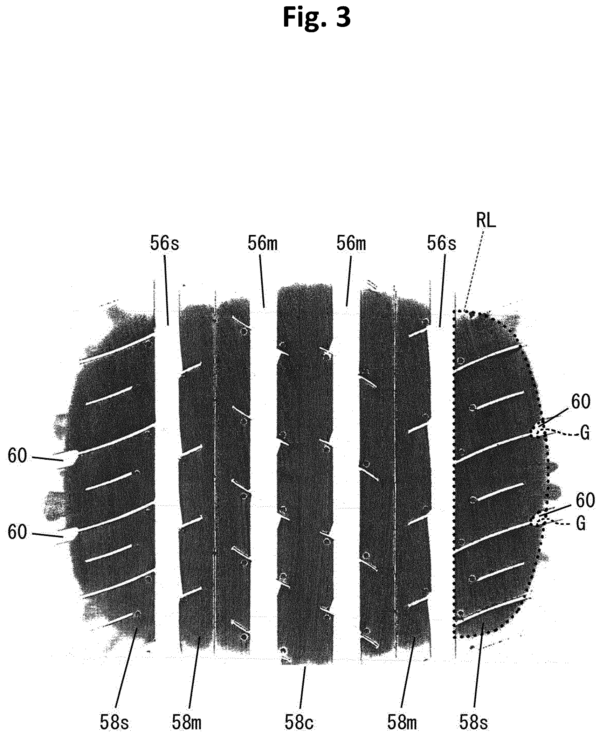

FIG. 3 shows a ground-contact surface, of the tire 2, which is in contact with a road surface. In FIG. 3, the up-down direction corresponds to the circumferential direction of the tire 2, and the right-left direction corresponds to the axial direction of the tire 2. The direction perpendicular to the surface of the sheet of FIG. 3 corresponds to the radial direction of the tire 2.

The ground-contact surface shown in FIG. 3 is obtained by applying a load equal to 68% of the normal load, to the tire 2 in the normal state and pressing the tire 2 against the road surface, using a tire ground-contact shape measuring device (not shown). To obtain this ground-contact surface, the tire 2 is placed such that the axial direction thereof is parallel to the road surface, and the above-described load is applied to the tire 2 in a direction perpendicular to the road surface. At the measuring device, the road surface is composed of a flat surface. In the measurement of the ground-contact surface, the tire 2 is pressed against the flat road surface.

In FIG. 3, a dotted line indicated by reference character RL represents the contour of a ground-contact surface of the shoulder land portion 58s included in the ground-contact surface. In the tire 2, the area of a region surrounded by the dotted line RL is represented as the area of the ground-contact surface of the shoulder land portion 58s. The area of the ground-contact surface of the shoulder land portion 58s includes the area of each groove 26 included in the ground-contact surface of the shoulder land portion 58s.

In FIG. 3, each dotted line indicated by reference character G represents the contour of the lateral groove 60 formed on the shoulder land portion 58s. In the tire 2, the area of a region surrounded by the dotted line G and the dotted line RL is the area of the lateral groove 60 included in the ground-contact surface of the shoulder land portion 58s.

Meanwhile, in the case where a groove having a groove width of 2.0 mm or greater is formed on a shoulder land portion of a tire, when the amount of air passing through the groove is large, the sound pressure level may be increased, resulting in generation of noise. The groove having a groove width of 2.0 mm or greater may impair the quietness of the tire. On the other hand, almost no air passes through a sipe having a groove width less than 2.0 mm, specifically, a groove width of 1.5 mm or less. Thus, the influence of the sipe on the quietness of the tire is small.

As described above, the plurality of lateral grooves 60 each having a groove width of 2.0 mm or greater are formed on each shoulder land portion 58s of the tire 2. However, in the tire 2, in a ground-contact surface obtained by fitting the tire 2 onto the normal rim, adjusting the internal pressure of the tire 2 to the normal internal pressure, and pressing the tire 2 at a load equal to 68% of the normal load at a camber angle of 0°, the ratio (AG/AL) of the areas AG of the lateral grooves 60 included in a ground-contact surface of the shoulder land portion 58s to the area AL of the ground-contact surface of the shoulder land portion 58s is not greater than 3%.

In the tire 2, the ratio of the areas AG of the lateral grooves 60 included in the ground-contact surface of the shoulder land portion 58s to the area AL of the ground-contact surface of the shoulder land portion 58s (hereinafter, the area ratio (AG/AL) of the lateral grooves 60 included in the ground-contact surface of the shoulder land portion 58s) is very low. The amount of air passing through each lateral groove 60 is reduced to be small, so that the sound pressure level when air passes through the lateral groove 60 is reduced. In the tire 2, improvement of quietness is achieved.

In order to achieve improvement of quietness, for example, adopting a thick tread is considered. However, in the tire 2, it is unnecessary to adopt a thick tread. In the tire 2, improvement of quietness is achieved without causing an increase in mass and rolling resistance which may be caused by adopting a thick tread. To achieve improvement of quietness, the area ratio (AG/AL) of the lateral grooves 60 included in the ground-contact surface of the shoulder land portion 58s is preferably lower. Thus, a preferable lower limit of the area ratio (AG/AL) is not set.

When the area ratio (AG/AL) of the lateral grooves 60 included in the ground-contact surface of the shoulder land portion 58s is reduced, the stiffness of the shoulder land portion 58s increases. Thus, in the tire 2, the stiffness balance of the tread 4 may be lost, resulting in an excessive increase in cornering force. In this case, steering stability and rollover resistance may be impaired.

However, in the tire 2, the cap layer 30 in each shoulder land portion 58s includes the side element 34. As described above, the side element 34 is more flexible than the center element 32. In the tire 2, although the area ratio (AG/AL) of the lateral grooves 60 included in the ground-contact surface of the shoulder land portion 58s is reduced, the stiffness of the shoulder land portion 58s is appropriately reduced, so that the stiffness of the entirety of the tread 4 is well balanced. In the tire 2, required steering stability and rollover resistance are ensured.

As described above, in the tire 2, improvement of quietness is achieved. Therefore, in the tire 2, improvement of quietness is achieved while required steering stability and rollover resistance are ensured.

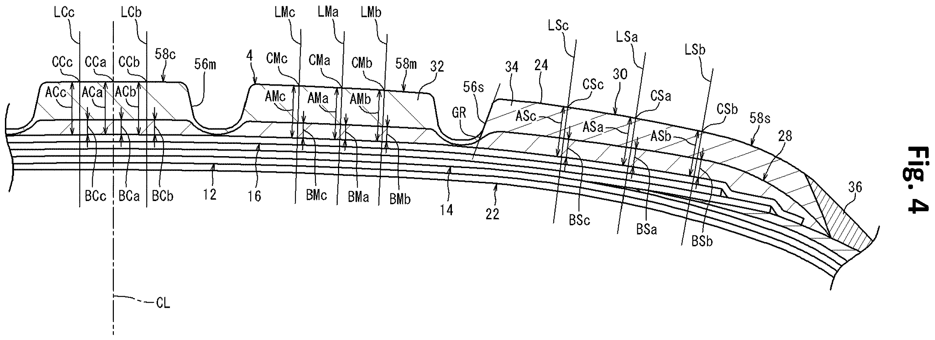

FIG. 4 shows a part of the tread 4 of the tire 2 shown in FIG. 1. In FIG. 4, the right-left direction is the axial direction of the tire 2, and the up-down direction is the radial direction of the tire 2. The direction perpendicular to the surface of the sheet of FIG. 4 is the circumferential direction of the tire 2.

In the tire 2, a side surface of each shoulder land portion 58s is also a groove wall of the shoulder circumferential groove 56s. The side surface of the shoulder land portion 58s or the groove wall of the shoulder circumferential groove 56s is the boundary between the shoulder circumferential groove 56s and the shoulder land portion 58s. In FIG. 4, this boundary is represented by a straight line indicated by reference character GR.

In the tire 2, a portion that is outward of the boundary GR in the axial direction is the shoulder land portion 58s. As shown in FIG. 4, in the tire 2, the cap layer 30 in the shoulder land portion 58s is composed of the flexible side element 34. The portion of the cap layer 30 that is inward of the boundary GR is composed of the hard center element 32. The boundary GR coincides with the boundary between the side element 34 and the center element 32 in the cap layer 30.

In the tire 2, the stiffness of the shoulder land portion 58s is appropriately reduced, so that the stiffness of the entirety of the tread 4 is well balanced. In the tire 2, required steering stability and rollover resistance are ensured. From this viewpoint, the cap layer 30 in the shoulder land portion 58s is preferably composed of the side element 34.

In the tire 2, the ratio (Hs/Hc) of a hardness Hs of the side element 34 to a hardness Hc of the center element 32 is preferably not greater than 98%. Accordingly, the flexible side element 34 effectively contributes to ensuring steering stability and rollover resistance. From this viewpoint, the ratio (Hs/Hc) is more preferably not greater than 95%.

In the tire 2, the ratio (Hs/Hc) of the hardness Hs of the side element 34 to the hardness He of the center element 32 is preferably not less than 85%. Accordingly, the stiffness of the shoulder land portion 58s is appropriately maintained. In this case as well, the side element 34 effectively contributes to ensuring steering stability and rollover resistance. From this viewpoint, the ratio (Hs/Hc) is more preferably not less than 90%.

In the tire 2, the hardness Hs of the side element 34 is preferably not less than 54 and preferably not greater than 63. Accordingly, the side element 34 effectively contributes to ensuring steering stability and rollover resistance. From this viewpoint, the hardness Hs of the side element 34 is more preferably not less than 56 and more preferably not greater than 61.

In the tire 2, from the viewpoint of balancing steering stability and ride comfort well, the hardness Hc of the center element 32 is preferably not less than 60 and preferably not greater than 70.

In FIG. 4, reference character CSa represents the position on the tread surface 24 at which the width WS of the shoulder land portion 58s is halved. The position CSa is the center of the shoulder land portion 58s. Reference character CSb and reference character CSc represent the positions away outwardly and inwardly from the center CSa, respectively, by a length equal to 25% of the width WS of the shoulder land portion 58s.

A solid line LSa is a normal line that is normal to the outer surface of the band 16 (or the inner surface of the tread 4) and passes through the center CSa. A double-headed arrow ASa represents the thickness from the band 16 to the tread surface 24, that is, the thickness of the tread 4, measured along the normal line LSa. A double-headed arrow BSa represents the thickness from the band 16 to the boundary between the base layer 28 and the cap layer 30, that is, the thickness of the base layer 28, measured along the normal line LSa. A solid line LSb is a normal line that is normal to the band 16 and passes through the position CSb. A double-headed arrow ASb represents the thickness of the tread 4 measured along the normal line LSb. A double-headed arrow BSb represents the thickness of the base layer 28 measured along the normal line LSb. A solid line LSc is a normal line that is normal to the band 16 and passes through the position CSc. A double-headed arrow ASc represents the thickness of the tread 4 measured along the normal line LSc. A double-headed arrow BSc represents the thickness of the base layer 28 measured along the normal line LSc. In the case where the groove 26 is located at a position at which the thickness of the tread 4 is measured, the thickness of the tread 4 is measured on the basis of a virtual tread surface obtained on the assumption that the groove 26 is not present.

In the tire 2, an average thickness AS of the tread 4 in the shoulder land portion 58s is obtained by calculating the average of the thickness ASa, the thickness ASb, and the thickness ASc. An average thickness BS of the base layer 28 in the shoulder land portion 58s is obtained by calculating the average of the thickness BSa, the thickness BSb, and the thickness BSc. In the tire 2, the ratio (BS/AS) of the average thickness BS of the base layer 28 to the average thickness AS of the tread 4 is a thickness ratio of the base layer 28 in the shoulder land portion 58s.

In FIG. 4, reference character CMa represents the position on the tread surface 24 at which the width WM of the middle land portion 58m is halved. The position CMa is the center of the middle land portion 58m. Reference character CMb and reference character CMc represent the positions away outwardly and inwardly from the center CMa, respectively, by a length equal to 25% of the width WM of the middle land portion 58m.

A solid line LMa is a normal line that is normal to the band 16 and passes through the center CMa. A double-headed arrow AMa represents the thickness of the tread 4 measured along the normal line LMa. A double-headed arrow BMa represents the thickness of the base layer 28 measured along the normal line LMa. A solid line LMb is a normal line that is normal to the band 16 and passes through the position CMb. A double-headed arrow AMb represents the thickness of the tread 4 measured along the normal line LMb. A double-headed arrow BMb represents the thickness of the base layer 28 measured along the normal line LMb. A solid line LMc is a normal line that is normal to the band 16 and passes through the position CMc. A double-headed arrow AMc represents the thickness of the tread 4 measured along the normal line LMc. A double-headed arrow BMc represents the thickness of the base layer 28 measured along the normal line LMc.

In the tire 2, an average thickness AM of the tread 4 in the middle land portion 58m is obtained by calculating the average of the thickness AMa, the thickness AMb, and the thickness AMc. An average thickness BM of the base layer 28 in the middle land portion 58m is obtained by calculating the average of the thickness BMa, the thickness BMb, and the thickness BMc. In the tire 2, the ratio (BM/AM) of the average thickness BM of the base layer 28 to the average thickness AM of the tread 4 is a thickness ratio of the base layer 28 in the middle land portion 58m.

In the tire 2, the thickness ratio (BS/AS) of the base layer 28 in the shoulder land portion 58s is preferably higher than the thickness ratio (BM/AM) of the base layer 28 in the middle land portion 58m. Accordingly, the stiffness of the shoulder land portion 58s is appropriately reduced, so that the stiffness of the entirety of the tread 4 is well balanced. In the tire 2, required steering stability and rollover resistance are sufficiently ensured. From this viewpoint, the difference between the thickness ratio (BS/AS) of the base layer 28 in the shoulder land portion 58s and the thickness ratio (BM/AM) of the base layer 28 in the middle land portion 58m is preferably not less than 5% and preferably not greater than 10%.

In FIG. 4, reference character CCa represents the point of intersection of the tread surface 24 and the equator plane CL. The position CCa corresponds to the equator of the tire 2. Reference character CCb and reference character CCc represent the positions away outwardly and inwardly from the equator CCa, respectively, by a length equal to 25% of the width WC of the center land portion 58c.

A double-headed arrow ACa represents the thickness of the tread 4 measured along the equator plane CL. A double-headed arrow BCa represents the thickness of the base layer 28 measured along the equator plane CL. A solid line LCb is a normal line that is normal to the band 16 and passes through the position CCb. A double-headed arrow ACb represents the thickness of the tread 4 measured along the normal line LCb. A double-headed arrow BCb represents the thickness of the base layer 28 measured along the normal line LCb. A solid line LCc is a normal line that is normal to the band 16 and passes through the position CCc. A double-headed arrow ACc represents the thickness of the tread 4 measured along the normal line LCc. A double-headed arrow BCc represents the thickness of the base layer 28 measured along the normal line LCc.

In the tire 2, an average thickness AC of the tread 4 in the center land portion 58c is obtained by calculating the average of the thickness ACa, the thickness ACb, and the thickness ACc. An average thickness BC of the base layer 28 in the center land portion 58c is obtained by calculating the average of the thickness BCa, the thickness BCb, and the thickness BCc. In the tire 2, the ratio (BC/AC) of the average thickness BC of the base layer 28 to the average thickness AC of the tread 4 is a thickness ratio of the base layer 28 in the center land portion 58c.

In the tire 2, the thickness ratio (BS/AS) of the base layer 28 in the shoulder land portion 58s is preferably higher than the thickness ratio (BC/AC) of the base layer 28 in the center land portion 58c. Accordingly, the stiffness of the shoulder land portion 58s is appropriately reduced, so that the stiffness of the entirety of the tread 4 is well balanced. In the tire 2, required steering stability and rollover resistance are sufficiently ensured. From this viewpoint, the difference between the thickness ratio (BS/AS) of the base layer 28 in the shoulder land portion 58s and the thickness ratio (BC/AC) of the base layer 28 in the center land portion 58c is preferably not less than 5% and preferably not greater than 10%.

In the tire 2, from the viewpoint of achieving improvement of quietness while ensuring required steering stability and rollover resistance, more preferably, the thickness ratio (BS/AS) of the base layer 28 in the shoulder land portion 58s is higher than the thickness ratio (BC/AC) of the base layer 28 in the center land portion 58c, and the thickness ratio (BS/AS) of the base layer 28 in the shoulder land portion 58s is higher than the thickness ratio (BM/AM) of the base layer 28 in the middle land portion 58m.

In the tire 2, the thickness ratio (BS/AS) of the base layer 28 in the shoulder land portion 58s is preferably not less than 20% and not greater than 45%.

When the thickness ratio (BS/AS) is set so as to be not less than 20%, the base layer 28 in the shoulder land portion 58s effectively contributes to ensuring steering stability and rollover resistance. From this viewpoint, the thickness ratio (BS/AS) is more preferably not less than 25%.

When the thickness ratio (BS/AS) is set so as to be not greater than 45%, the stiffness of the shoulder land portion 58s is appropriately maintained. In the tire 2, good steering stability is maintained, and an increase in rolling resistance is minimized. From this viewpoint, the thickness ratio (BS/AS) is more preferably not greater than 40%.

In the tire 2, from the viewpoint of balancing steering stability and ride comfort well, the thickness ratio (BM/AM) of the base layer 28 in the middle land portion 58m is preferably not less than 10% and preferably not less than 15%. The ratio (BM/AM) is more preferably not greater than 30% and more preferably not greater than 25%. The thickness ratio (BC/AC) of the base layer 28 in the center land portion 58c is preferably not less than 10% and more preferably not less than 15%. The ratio (BC/AC) is preferably not greater than 30% and more preferably not greater than 25%.

As shown in FIG. 1, in the tire 2, an end 82 of the turned-up portion 46 is located between the belt 14 and the ply main body 44. In other words, the end 82 of the turned-up portion 46 overlaps a portion at an end 14a of the belt 14 in the radial direction. The carcass 12 has an "ultra-highly turned-up structure".

As described above, the carcass 12 of the tire 2 has a radial structure. Furthermore, in the tire 2, since the carcass 12 has an ultra-highly turned-up structure, high tension is generated in the carcass 12. In the tire 2, since the sidewall 6 portion has high stiffness, improvement of steering stability and rollover resistance is achieved. From this viewpoint, in the tire 2, the end 82 of the turned-up portion 46 is preferably located between the belt 14 and the ply main body 44, in other words, the carcass 12 preferably has an ultra-highly turned-up structure. The carcass 12 having an ultra-highly turned-up structure acts particularly effectively on a tire 2 having a nominal aspect ratio of 45% or less. The nominal aspect ratio is a "nominal aspect ratio" in the "tyre size" specified in JIS D4202 "Automobile tyres-Designation and dimensions".

As described above, the carcass 12 includes cords formed from an organic fiber, as carcass cords. From the viewpoint that the carcass 12 can effectively contribute to improvement of steering stability and rollover resistance, the thickness of each carcass cord is preferably not less than 1670 dtex. The thickness of each carcass cord is represented as a "fineness based on corrected weight of cord" in the standards of JIS L1017.

As described above, according to the present invention, the pneumatic tire 2 having excellent quietness is obtained. In particular, in the tire 2, improvement of quietness is achieved while required steering stability and rollover resistance are ensured. The tire 2 is also suitable for use as a tire for an electric vehicle in addition to a tire for an automobile in which an engine is used as a power generator. Since rollover resistance is also taken into consideration, the tire 2 is also suitable for use as a tire for an SUV that is an electric vehicle.

### EXAMPLES

Hereinafter, the present invention will be described in further detail by means of examples, etc., the present invention being limited by the claims.

### [Example 1]

A pneumatic tire for a passenger car (tire size = 235/55R19) having the basic structure shown in FIG. 1 and having specifications shown in Table 1 below was obtained.

In Example 1, the area ratio (AG/AL) of the lateral grooves included in the ground-contact surface of the shoulder land portion was 3%. The ratio (Hs/Hc) of the hardness Hs of the side element to the hardness Hc of the center element was 90%. The thickness ratio (BC/AC) of the base layer in the center land portion was 20%. The thickness ratio (BM/AM) of the base layer in the middle land portion was 20%. The thickness ratio (BS/AS) of the base layer in the shoulder land portion was 20%.

### [Comparative Examples 1, 2, and 4]

Tires of Comparative Examples 1, 2, and 4 were obtained in the same manner as Example 1, except that the area ratio (AG/AL) and the ratio (Hs/Hc) were set as shown in Table 1 below. The tire of Comparative Example 1 is a conventional tire.

### [Examples 3 and 4 and Comparative Example 3]

Tires of Examples 3 and 4 and Comparative Example 3 were obtained in the same manner as Example 1, except that the area ratio (AG/AL) was set as shown in Tables 1 and 2 below.

### [Example 2]

A tire of Example 2 was obtained in the same manner as Example 1, except that the area ratio (AG/AL) was set as shown in Table 1 below.

### [Examples 5 to 8]

Tires of Examples 5 to 8 were obtained in the same manner as Example 1, except that the ratio (BS/AS) was set as shown in Table 2 below.

### [Rolling Resistance (RRC)]

The rolling resistance coefficient (RRC) when each test tire was run on a drum at a speed of 80 km/h under the following conditions was measured using a rolling resistance tester. The results are indicated as indexes in Tables 1 and 2 below. A lower value represents that the rolling resistance is smaller.
Rim: 19×7.5J
Internal pressure: 210 kPa
Vertical load: 6.47 kN

### [Steering Stability]

Test tires were fitted onto rims (size = 19×7.5J) and inflated with air to adjust the internal pressures thereof to 240 kPa. The tires were mounted to all the wheels of an electric vehicle (one occupant) as a test vehicle, and the vehicle was driven on a test course having a dry asphalt road surface. The driver made evaluation (sensory evaluation) for steering stability. The results are indicated as indexes in the cells for "steering stability" in Tables 1 and 2 below. A higher value represents that the steering stability is better.

### [Rollover Resistance]

Test tires were fitted onto rims (size = 19×7.5J) and inflated with air to adjust the internal pressures thereof to 240 kPa. The tires were mounted to all the wheels of an electric vehicle (one occupant) as a test vehicle, the vehicle was driven at a constant speed on a J-turn road having a dry asphalt road surface, and the rollover limit speed when steered 180° was measured. The results are indicated as indexes in the cells for "rollover resistance" in Tables 1 and 2 below. A higher value represents that the rollover resistance is better.

### [Quietness]

Test tires were fitted onto rims (size = 19×7.5J) and inflated with air to adjust the internal pressures thereof to 240 kPa. The tires were mounted to all the wheels of an electric vehicle (one occupant) as a test vehicle, and the vehicle was driven at a speed of 60 km/h on a test course having a dry asphalt road surface. At that time, the sound pressure level of the sound inside the vehicle having a frequency of 800 Hz or higher was measured at an ear position on the driver's seat window side. The results are indicated as indexes in the cells for "quietness" in Tables 1 and 2 below. A higher value represents that the sound pressure level is lower and that the quietness is better.

**[Table 1]**

| | Comparative Example 1 | Comparative Example 2 | Comparative Example 3 | Comparative Example 4 | Example 1 | Example 2 |
|---|---|---|---|---|---|---|
| AG/AL [%] | 20 | 4 | 3 | 2 | 3 | 1 |
| Hs/Hc [%] | 100 | 100 | 100 | 100 | 90 | 90 |
| BC/AC [%] | 20 | 20 | 20 | 20 | 20 | 20 |
| BM/AM [%] | 20 | 20 | 20 | 20 | 20 | 20 |
| BS/AS [%] | 20 | 20 | 20 | 20 | 20 | 20 |
| RRC | 100 | 100 | 100 | 100 | 100 | 100 |
| Steering stability | 90 | 90 | 90 | 90 | 110 | 110 |
| Rollover resistance | 90 | 90 | 90 | 90 | 110 | 110 |
| Quietness | 80 | 95 | 100 | 105 | 100 | 110 |

**[Table 2]**

| | Example 3 | Example 4 | Example 5 | Example 6 | Example 7 | Example 8 |
|---|---|---|---|---|---|---|
| AG/AL [%] | 3 | 3 | 3 | 3 | 3 | 3 |
| Hs/Hc [%] | 95 | 85 | 90 | 90 | 90 | 90 |
| BC/AC [%] | 20 | 20 | 20 | 20 | 20 | 20 |
| BM/AM [%] | 20 | 20 | 20 | 20 | 20 | 20 |
| BS/AS [%] | 20 | 20 | 25 | 30 | 40 | 45 |
| RRC | 100 | 100 | 102 | 102 | 104 | 104 |
| Steering stability | 100 | 95 | 115 | 120 | 120 | 115 |
| Rollover resistance | 100 | 95 | 115 | 120 | 125 | 125 |
| Quietness | 100 | 100 | 100 | 100 | 100 | 100 |

As shown in Tables 1 and 2, in each Example, improvement of quietness is achieved while required steering stability and rollover resistance are ensured. From the evaluation results, advantages of the present invention are clear.

The above-described technology for achieving improvement of quietness can also be applied to various tires.

## Claims

1. A pneumatic tire (2) comprising a tread (4) having a base layer (28) and a cap layer (30) located radially outward of the base layer (28), wherein
the cap layer (30) includes a center element (32) and a pair of side elements (34) located outward of the center element (32) in an axial direction,
the hardness of each side element (34) is lower than the hardness of the center element (32), when the hardness is measured according to the standards of JIS K6253 under a temperature condition of 23°C using a type A durometer,
**characterized in that**
a plurality of circumferential grooves (56, 56s, 56m) are formed on the tread (4), whereby a plurality of land portions (58, 58s, 58m, 58c) are formed in the tread (4),
among the plurality of circumferential grooves (56, 56s, 56m), a circumferential groove located on each outer side in the axial direction is a shoulder circumferential groove (56s),
among the plurality of land portions (58, 58s, 58m, 58c), a land portion located on each outer side in the axial direction is a shoulder land portion (58s), and a land portion located inward of the shoulder land portion (58s) is a middle land portion (58m),
a plurality of lateral grooves (60) each having a groove width of 2.0 mm or greater are formed on the shoulder land portion (58s),
in a ground-contact surface obtained by fitting the tire (2) onto a normal rim, adjusting an internal pressure of the tire (2) to a normal internal pressure, and pressing the tire (2) against a road surface at a load equal to 68% of a normal load at a camber angle of 0°, a ratio (AG/AL) of areas (AG) of the lateral grooves (60) included in the ground-contact surface of the shoulder land portion (58s) to an area (AL) of the ground-contact surface of the shoulder land portion (58s) is not greater than 3%,
the cap layer (30) in the shoulder land portion (58s) includes the side element (34),
the lateral grooves (60) each have an end portion within the shoulder land portion (58s) and extend from the end portion toward an end of the tread (4),
a plurality of open sipes (66) each having a groove width of 1.5 mm or less are formed on the shoulder land portion (58s), and
the open sipes (66) connect the shoulder circumferential groove (56s) and the end portions of the lateral grooves (60).

2. The pneumatic tire (2) according to claim 1, wherein the cap layer (30) in the shoulder land portion (58s) is composed of the side element (34).

3. The pneumatic tire (2) according to claim 1 or 2, wherein a ratio BS/AS of the average thickness BS of the base layer (28) and the average thickness AS of the cap layer (30) in the shoulder land portion (58s) is higher than a ratio BM/AM of the average thickness BM of the base layer (28) and the average thickness AM of the cap layer (30) in the middle land portion (58m).

4. The pneumatic tire (2) according to any one of claims 1 to 3, wherein
the plurality of circumferential grooves (56, 56s, 56m) include a middle circumferential groove (56m) located inward of the shoulder circumferential groove (56s) in the axial direction,
a portion between the shoulder circumferential groove (56s) and the middle circumferential groove (56m) is the middle land portion (58m),
a plurality of dead-end sipes (72) each having a groove width of 1.5 mm or less are formed on the middle land portion (58m),
the plurality of dead-end sipes (72) include a first dead-end sipe (76) having an end portion within the middle land portion (58m) and connecting the end portion and the shoulder circumferential groove (56s), and a second dead-end sipe (78) having an end portion within the middle land portion (58m) and connecting the end portion and the middle circumferential groove (56m),
the first dead-end sipe (76) and the second dead-end sipe (78) are inclined relative to the axial direction, and
a direction of inclination of the first dead-end sipe (76) and a direction of inclination of the second dead-end sipe (78) are opposite to each other.

5. The pneumatic tire (2) according to claim 4, wherein the first dead-end sipe (76) has a groove width larger than that of the second dead-end sipe (78).

## Patentansprüche

1. Luftreifen (2), der eine Lauffläche (4) mit einer Basisschicht (28) und einer Deckschicht (30) umfasst, die radial außerhalb der Basisschicht (28) angeordnet ist, wobei
die Deckschicht (30) ein zentrales Element (32) und ein Paar von Seitenelementen (34) aufweist, die in einer axialen Richtung außerhalb des zentralen Elements (32) angeordnet sind,
die Härte jedes Seitenelements (34) geringer als die Härte des zentralen Elements (32) ist, wenn die Härte gemäß den Standards JIS K 6253 unter einer Temperaturbedingung von 23°C unter Verwendung eines Typ-A-Durometers gemessen wird,
**dadurch gekennzeichnet, dass**
mehrere Umfangsrillen (56, 56s, 56m) in der Lauffläche (4) gebildet sind, wodurch mehrere Landabschnitte (58, 58s, 58m, 58c) in der Lauffläche (4) gebildet sind,
unter den mehreren Umfangsrillen (56, 56s, 56m) eine Umfangsrille, die in der axialen Richtung auf der jeweiligen Außenseite angeordnet ist, eine Schulterumfangsrille (56s) ist,
unter den mehreren Landabschnitten (58, 58s, 58m, 58c) ein Landabschnitt, der in der axialen Richtung auf der jeweiligen Außenseite angeordnet ist, ein Schulterlandabschnitt (58s) ist und ein Landabschnitt, der innerhalb des Schulterlandabschnitts (58s) angeordnet ist, ein Mittellandabschnitt (58m) ist,
mehrere Querrillen (60), die jeweils eine Rillenbreite von 2,0 mm oder größer aufweisen, in dem Schulterlandabschnitt (58s) gebildet sind,
in einer Bodenkontaktfläche, die erhalten wird, indem der Reifen (2) an einer Normalfelge montiert wird, ein Innendruck des Reifens (2) auf einen normalen Innendruck eingestellt wird und der Reifen (2) bei einer Last, die gleich 68 % einer Normallast bei einem Sturzwinkel von 0° ist, gegen eine Straßenoberfläche gedrückt wird, ein Verhältnis (AG/AL) von Flächeninhalten (AG) der Querrillen (60), die in der Bodenkontaktfläche des Schulterlandabschnitts (58s) enthalten sind, zu einem Flächeninhalt (AL) der Bodenkontaktfläche des Schulterlandabschnitts (58s) nicht größer als 3 % ist,
die Deckschicht (30) in dem Schulterlandabschnitt (58s) das Seitenelement (34) umfasst,
die Querrillen (60) jeweils einen Endabschnitt innerhalb des Schulterlandabschnitts (58s) aufweisen und sich von dem Endabschnitt in Richtung eines Endes der Lauffläche (4) erstrecken,
mehrere offene Feinschnitte (66), die jeweils eine Rillenbreite von 1,5 mm oder weniger aufweisen, in dem Schulterlandabschnitt (58s) gebildet sind und
die offenen Feinschnitte (66) die Schulterumfangsrille (56s) und die Endabschnitte der Querrillen (60) verbinden.

2. Luftreifen (2) nach Anspruch 1, wobei die Deckschicht (30) in dem Schulterlandabschnitt (58s) durch das Seitenelement (34) gebildet ist.

3. Luftreifen (2) nach Anspruch 1 oder 2, wobei ein Verhältnis BS/AS der mittleren Dicke BS der Basisschicht (28) und der mittleren Dicke AS der Deckschicht (30) in dem Schulterlandabschnitt (58s) höher als ein Verhältnis BM/AM der mittleren Dicke BM der Basisschicht (28) und der mittleren Dicke AM der Deckschicht (30) in dem Mittellandabschnitt (58m) ist.

4. Luftreifen (2) nach einem der Ansprüche 1 bis 3, wobei
die mehreren Umfangsrillen (56, 56s, 56m) eine Mittelumfangsrille (56m) umfassen, die in der axialen Richtung innerhalb der Schulterumfangsrille (56s) angeordnet ist,
ein Abschnitt zwischen der Schulterumfangsrille (56s) und der Mittelumfangsrille (56m) der Mittellandabschnitt (58m) ist,
mehrere Sackgassen-Feinschnitte (72), die jeweils eine Rillenbreite von 1,5 mm oder weniger aufweisen, in dem Mittellandabschnitt (58m) gebildet sind,
die mehreren Sackgassen-Feinschnitte (72) einen ersten Sackgassen-Feinschnitt (76), der einen Endabschnitt innerhalb des Mittellandabschnitts (58m) aufweist und den Endabschnitt mit der Schulterumfangsrille (56s) verbindet, und einen zweiten Sackgassen-Feinschnitt (78) umfassen, der einen Endabschnitt innerhalb des Mittellandabschnitts (58m) aufweist und den Endabschnitt mit der Mittelumfangsrille (56m) verbindet,
der erste Sackgassen-Feinschnitt (76) und der zweite Sackgassen-Feinschnitt (78) relativ zu der axialen Richtung geneigt sind und
eine Neigungsrichtung des ersten Sackgassen-Feinschnitts (76) und eine Neigungsrichtung des zweiten Sackgassen-Feinschnitts (78) zueinander entgegengesetzt sind.

5. Luftreifen (2) nach Anspruch 4, wobei der erste Sackgassen-Feinschnitt (76) eine Rillenbreite aufweist, die größer als diejenige des zweiten Sackgassen-Feinschnitts (78) ist.

## Revendications

1. Bandage pneumatique (2) comprenant une bande de roulement (4) ayant une couche de base (28) et une couche de chape (30) située radialement à l'extérieur de la couche de base (28), dans lequel
la couche de chape (30) inclut un élément central (32) et une paire d'éléments latéraux (34) situés à l'extérieur de l'élément central (32) dans une direction axiale,
la dureté de chaque élément latéral (34) est inférieure à la dureté de l'élément central (32), la dureté étant mesurée en accord avec les standards de la norme industrielle japonaise JIS K6253 dans une condition de température de 23 °C en utilisant un duromètre de type A,
**caractérisé en ce que**
une pluralité de rainures circonférentielles (56, 56s, 56m) sont formées sur la bande de roulement (4), grâce à quoi une pluralité de portions en relief (58, 58s, 58m) sont formées dans la bande de roulement (4),
parmi la pluralité de rainures circonférentielles (56, 56s, 56m), une rainure circonférentielle située sur chaque côté extérieur dans la direction axiale est une rainure circonférentielle d'épaulement (56s),
parmi la pluralité de portions en relief (58, 58s, 58m), une portion en relief située sur chaque côté extérieur dans la direction axiale est une portion en relief d'épaulement (58s), et une portion en relief située à l'intérieur de la portion en relief d'épaulement (58s) est une portion en relief médiane (58m),
une pluralité de rainures latérales (60) ayant chacune une largeur de rainure de 2,0 mm ou plus sont formées sur la portion en relief d'épaulement (58s),
dans une surface de contact au sol obtenue en montant le pneumatique (2) sur une jante normale, en ajustant une pression interne du pneumatique (2) à une pression interne normale, et en pressant le pneumatique (2) contre une surface routière à une charge égale à 68 % d'une charge normale sous un angle de cambrure de 0°, un rapport (AG/AL) d'aires (AG) des rainures latérales (60) incluses dans la surface de contact au sol de la portion en relief d'épaulement (58s) sur une aire (AL) de la surface de contact au sol de la portion en relief d'épaulement (58s) n'est pas supérieur à 3 %,
la couche de chape (30) dans la portion en relief d'épaulement (58s) inclut l'élément latéral (34),
les rainures latérales (60) ont chacune une portion d'extrémité à l'intérieur de la portion en relief d'épaulement (58s) et s'étendent depuis la portion d'extrémité vers une extrémité de la bande de roulement (4),
une pluralité de fentes ouvertes (66) ayant chacune une largeur de rainure de 1,5 mm ou moins sont formées sur la portion en relief d'épaulement (58s), et
les fentes ouvertes (66) connectent la rainure circonférentielle d'épaulement (56s) et les portions d'extrémité des rainures latérales (60).

2. Bandage pneumatique (2) selon la revendication 1, dans lequel la couche de chape (30) dans la portion en relief d'épaulement (58s) est composée de l'élément latéral (34).

3. Bandage pneumatique (2) selon la revendication 1 ou 2, dans lequel un rapport BS/AS de l'épaisseur moyenne BS de la couche de base (28) et de l'épaisseur moyenne AS de la couche de chape (30) dans la portion en relief d'épaulement (58s) est plus grand qu'un rapport BM/AM de l'épaisseur moyenne BM de la couche de base (28) et de l'épaisseur moyenne AM de la couche de chape (30) dans la portion en relief médiane (58m).

4. Bandage pneumatique (2) selon l'une quelconque des revendications 1 à 3, dans lequel
la pluralité de rainures circonférentielles (56, 56s, 56m) incluent une rainure circonférentielle médiane (56m) située à l'intérieur de la rainure circonférentielle d'épaulement (56s) dans la direction axiale,
une portion entre la rainure circonférentielle d'épaulement (56s) et la rainure circonférentielle médiane (56m) est la portion en relief médiane (58m),
une pluralité de fentes à cul-de-sac (72) ayant chacune une largeur de rainure de 1,5 mm ou moins sont formées sur la portion en relief médiane (58m),
la pluralité de fentes à cul-de-sac (72) inclut une première fente à cul-de-sac (76) ayant une portion d'extrémité à l'intérieur de la portion en relief médiane (58m) et connectant la portion d'extrémité et la rainure circonférentielle d'épaulement (56s), et une seconde fente à cul-de-sac (78) ayant une portion d'extrémité à l'intérieur de la portion en relief médiane (58m) et connectant la portion d'extrémité et la rainure circonférentielle médiane (56m),
la première fente à cul-de-sac (76) et la seconde fente à cul-de-sac (78) sont inclinées relativement à la direction axiale, et
une direction d'inclinaison de la première fente à cul-de-sac (76) et une direction d'inclinaison de la seconde fente à cul-de-sac (78) sont opposées l'une à l'autre.

5. Bandage pneumatique (2) selon la revendication 4, dans lequel la première fente à cul-de-sac (76) a une largeur de rainure plus grande que celle de la seconde fente à cul-de-sac (78).
